# EUROPÄISCHE PATENTANMELDUNG

(11) **EP 1 293 933 A1**
(43) Veröffentlichungstag der Anmeldung: **19.03.2003**
(21) Anmeldenummer: 01121104.2
(22) Anmeldetag: 03.09.2001
(51) Int. Cl.: G06T 7/00

(54) **Verfahren zum automatischen Erkennen von rote-Augen-Defekten in fotografischen Bilddaten**

(71) Anmelder: Agfa-Gevaert AG, 51373 Leverkusen (DE)
(72) Erfinder: Fürsich, Manfred, 82024 Taufkirchen (DE); Meckes, Günter, 81477 München (DE)

(57) **Zusammenfassung**

Die Erfindung betrifft ein Verfahren zum automatischen Erkennen von rote-Augen-Defekten in fotografischen Bilddaten. Ein Verfahrensschritt umfasst ein Objekterkennungsverfahren, welches Gesichter in Bilddaten anhand von Dichteverläufen findet, welche für diese typisch sind.

## Beschreibung

Die Erfindung betrifft ein Verfahren zum Erkennen von rote-Augen-Defekten in fotografischen Bilddaten nach dem Oberbegriff von Anspruch 1.

Derartige Verfahren sind aus verschiedenen Anmeldungen, die sich mit digitaler Bildverarbeitung befassen, bekannt.

Zur Detektion roter Augen existieren halbautomatische Programme, bei denen der Benutzer bei einem am PC dargestellten Bild eine Region markieren muss, in der die roten Augen enthalten sind. Innerhalb dieser markierten Region werden dann die roten Fehlstellen automatisch erkannt, eine Korrekturfarbe, welche zur Helligkeit des Auges passt, wird zugewiesen und die Korrektur automatisch durchgeführt.

Derartige Verfahren sind jedoch für automatische Kopiergeräte nicht geeignet, da an diesen viele Bilder sehr schnell nacheinander bearbeitet werden müssen und keine Zeit ist, jedes einzelne Bild vom Benutzer anschauen und evtl. markieren zu lassen.

Aus diesem Grund wurden für die Verwendung in automatischen Kopiergeräten bereits vollautomatische Verfahren entwickelt.

So beschreibt beispielsweise die EP 0961225 ein Programm zum Erkennen roter Augen in digitalen Bildern, welches mehrere Schritte umfasst. Hier werden zunächst Gebiete detektiert, welche Hauttöne aufweisen. Der nächste Schritt besteht darin, Ellipsen in diese detektierten Regionen mit Hauttönen einzupassen. Nur Regionen, in die derartige Ellipsen eingepasst werden können, werden im weiteren Verlauf als Kandidatenregionen für rote Augen betrachtet. Innerhalb dieser Regionen werden dann zwei rote-Augen-Kandidaten gesucht, deren Abstand - sobald sie ermittelt wurden - mit dem Abstand von Augen verglichen wird. Die als mögliche Augen detektierten Gebiete um die roten-Augen-Kandidaten werden nun mit Augentemplates verglichen, um zu verifizieren, dass es sich dabei tatsächlich um Augen handelt. Falls auch die letzten beiden Kriterien erfüllt sind, wird davon ausgegangen, dass rote Augen gefunden wurden. Anschließend werden diese roten Augen korrigiert.

Nachteilig an diesem Programm ist, dass oftmals rote Punkte im Bild, welche in beliebigen hautfarbenen Regionen liegen, als rote-Augen-Defekte erkannt werden, sobald um sie herum Strukturen ähnlich einem Auge zu finden sind.

Aufgabe der Erfindung war es deshalb, ein Verfahren zum automatischen Erkennen roter Augen zu entwickeln, welches möglichst zuverlässig arbeitet, d. h. rote-Augen-Defekte sicher findet, ohne andere Details fälschlicherweise als solche Defekte zu detektieren, wobei die Überprüfung der Bilddaten in einem Zeitrahmen stattfindet, der für automatische Kopiergeräte geeignet ist.

Gelöst wird diese Aufgabe gemäß der Erfindung durch ein Verfahren mit den Merkmalen von Anspruch 1. Weitere vorteilhafte Ausführungsformen sind Bestandteil der Unteransprüche im Zusammenhang mit der Beschreibung und den Zeichnungen.

Erfindungsgemäß werden die digital vorliegenden Bilddaten einem Objekterkennungsverfahren unterzogen, welches Gesichter in den Bilddaten anhand von für Gesichter charakteristischen Dichteverläufen sucht. Ein für ein Gesicht charakteristischer Dichteverlauf im Bereich der Augenpartie ist beispielsweise hohe Negativdichte, also helle Fläche im Bereich der Schläfen, dann niedrigere Dichte, also eher dunkle Fläche im Bereich des ersten Auges, dann zu einem Peak ansteigende Dichte im Bereich der Nase, wiederum in etwa die schon einmal erreichte reduzierte Dichte im Bereich des zweiten Auges und dann ein Anstieg zur hohen Anfangsdichte im Bereich der zweiten Schläfe. Ebenso wie diese beschriebenen Zeilendichteverläufe können aber auch Flächendichteverläufe verwendet werden. Derartige Objekterkennungsverfahren sind aus dem Bereich der Personenüberwachung oder Identitätskontrollen bekannt. Diese Verfahren im Bereich der rote-Augen-Defekterkennung einzusetzen, bietet die Möglichkeit, ein sehr aussagekräftiges Kriterium, nämlich das Vorhandensein eines Gesichts in den Bilddaten, mit bei der Defekterkennung einzubeziehen. Damit wird die Zuverlässigkeit eines rote-Augen-Defekterkennungsverfahrens maßgeblich erhöht. Da derartige Objekterkennungsverfahren auch bei Personenkontrollen in der Regel in Echtzeit arbeiten müssen, sind sie ausreichend schnell, um dem zeitlichen Rahmen von fotografischen Kopiergeräten zu genügen.

Vorteilhafterweise werden zur Suche nach einem Gesicht mittels eines Objekterkennungsverfahrens nur die Grauwerte der Bilddaten verwendet. Da ohnehin nur Dichteverläufe analysiert werden, ist es völlig ausreichend, diesen reduzierten, nicht farbigen Bilddatensatz zu verwenden, um Rechenzeit und -kapazität zu sparen.

Es ist auch vorteilhaft, die Auflösung des Bilddatensatzes vor Anwendung des Objekterkennungsverfahrens zu reduzieren, um die doch relativ rechenzeitintensiven Algorithmen auf weniger Daten anzuwenden. Für eine zuverlässige Erkennung von Gesichtern ist es nämlich nicht notwendig, den für einen guten Druck oder die bekannten rote-Augen-Erkennungsverfahren erforderlichen, sehr hoch aufgelösten Bilddatensatz zu untersuchen.

Ein vorteilhaft zu verwendendes Objekterkennungsverfahren ist beispielsweise das im Bericht IS&T/SID Eighth Color Imaging Conference beschriebene Gesichtserkennungsverfahren, welches mit flexiblen Templates arbeitet.

In diesem Verfahren verwendet man allgemeine Beispielgesichter, vergrößert, verkleinert und verschiebt diese, während man sie immer wieder in verschiedenen Positionen mit den Bilddaten vergleicht, um ähnliche Strukturen in den verglichenen Graustufenbildern zu finden. An der Stelle, an der sich die größte Übereinstimmung zwischen einem der gewählten und veränderten Beispielgesichter und den Dichteverläufen in den Bilddaten ergibt, wird ein Ähnlichkeitswert festgelegt. Überschreitet dieser Ähnlichkeitswert eine bestimmte Schwelle, geht man davon aus, dass in den Bilddaten ein Gesicht detektiert wurde. Dieses Verfahren arbeitet sehr zuverlässig, ist aber relativ aufwändig. Dennoch kann es im Rahmen eines rote-Augen-Defekterkennungsverfahrens sehr gut für kleinere und langsamere Kopiergeräte verwendet werden. Es läßt sich auch einsetzen, wenn vor Anwendung dieses Verfahrens bereits anhand anderer Kriterien Bilder ausgeschlossen werden, welche mit Sicherheit keine roten-Augen-Defekte aufweisen, da es sich beispielsweise um Schwarzweißbilder oder Bilder, bei denen kein Blitz verwendet wurde, handelt. Für dieses vorgeschaltete Ausschlussverfahren eignen sich noch diverse andere Kriterien, welche in der Figurenbeschreibung erläutert werden.

Ein weiteres, vorteilhaftes Objekterkennungsverfahren ist das im IEEE Transactions on Computers, Vol. 42, No. 3, März 1993, beschriebene Verfahren, welches mit verformbaren Gittern arbeitet. In diesem Verfahren werden verformte Standardgitter mehrerer Vergleichsgesichter in beliebiger Orientierung über die Bilddaten verschoben. Durch Vergleichen der Fouriertransformierten der Standardgitter-Knotenpunkte mit den Fouriertransformierten des Bildinhalts an den den Knotenpunkten entsprechenden Bildstellen wird der Dichteverlauf von Gitter und Bildinhalt an den transformierten Stellen und deren Umgebung verglichen. In der Form und Position, an der sich die beste Übereinstimmung von verformtem Standardgitter und Bildinhalt ergibt, wird das Gitter festgehalten und ein Ähnlichkeitswert gebildet. Sobald der Ähnlichkeitswert eine bestimmte Schwelle überschreitet, wird wiederum davon ausgegangen, dass im Bildinhalt ein Gesicht entsprechend des gewählten Standardgitters detektiert wurde. Auch dieses Verfahren arbeitet sehr zuverlässig, ist aber immer noch vergleichsweise rechenzeitaufwändig. Aus diesem Grund bietet es sich ebenfalls insbesondere für langsamere Kopiergeräte oder in Detektionsverfahren, bei denen bereits eine Vorauswahl anhand anderer Kriterien geschaffen wurde, an.

Ebenfalls ein vorteilhaftes Verfahren, welches sehr gut im Rahmen eines rote-Augen-Erkennungsverfahrens verwendet werden kann, ist das in Journal of Electronic Imaging 9(2), 226-233 (April 2000) publizierte Verfahren, welches auf der Verwendung von Eigenvektoren basiert. Bei dieser Methode wird die Matrix aller Bilddaten des Graustufenbildes in einen Vektor umgewandelt. Zu diesem Vektor werden mehrere Eigenvektoren gebildet. Diese Eigenvektoren werden mit nach demselben Verfahren gebildeten Eigenvektoren von Standardgesichtern verglichen. Von dem Eigenvektor, der die größte Übereinstimmung bietet, wird auf die zugehörige Position in den Bilddaten geschlossen und, sobald die Übereinstimmung einen bestimmten Grad überschreitet, davon ausgegangen, dass sich an dieser Stelle ein Gesicht befindet. Aufgrund der verwendeten Matrizen und Vektorrechnungen ist dieses Verfahren ebenfalls sehr rechenzeitaufwändig, was aber ebenso wie bei den anderen Verfahren u. U. durch Erhöhen der Rechenkapazität ausgeglichen werden kann.

Es gibt noch weitere vorteilhafte Gesichtserkennungsverfahren, welche hier verwendet werden können. Beispielsweise arbeitet eine Histogramm-Methode damit, zeilenweise Histogramme von Dichteverlaufsbildern der Bilddaten zu bilden und diese mit Histogrammen von Modellgesichtern zu vergleichen. Dieses Verfahren hat jedoch den Nachteil, dass nur Gesichter in einer bestimmten Orientierung zu finden sind, außer es werden auch in einer anderen Orientierung vorliegende Modellgesichter zur Verfügung gestellt. Eine weitere bekannte Methode arbeitet mit neuronalen Netzen. In diese Netze wird der vollständige, grob gerasterte Bilddatensatz eingelesen und mittels des neuronalen Netzes bewertet. Da das Netz gelernt hat, wie Bilder mit Gesichtern aussehen, geht man davon aus, dass es beurteilen kann, ob ein neues Bild ein Gesicht enthält oder nicht. Auch hier werden, um Rechenzeit zu sparen, vorzugsweise Graustufenbilder verwendet. Dieses Verfahren ist jedoch weniger zuverlässig als die bereits genannten Verfahren. Ist es jedoch notwendig, ein schnelleres Verfahren einzusetzen, wobei auf die Zuverlässigkeit kein so großer Wert gelegt wird, kann dieses Verfahren gut verwendet werden. In der Literatur sind weitere derartige Verfahren veröffentlicht, welche alle im Rahmen der Erfindung nutzbar sind, vorausgesetzt, sie arbeiten mit den Dichteverläufen des Bildes und nicht mit dem vollständigen mehrfarbigen Datensatz. Der farbige Datensatz kann allenfalls dazu verwendet werden, im Vorfeld anhand der Suche nach Hauttönen abzuklären, ob sich überhaupt Personen auf der Aufnahme befinden. Es ist sinnvoll, nur bei Bildern, bei denen aufgrund einer Voruntersuchung davon ausgegangen werden kann, dass es sich um Personenaufnahmen handelt, nach rote-Augen-Defekten und damit nach Gesichtern zu suchen, insbesondere wenn derartig aufwändige Gesichtserkennungsverfahren verwendet werden.

In einer vorteilhaften Ausführung des erfindungsgemäßen Verfahrens wird das Objekterkennungsverfahren dazu verwendet, in allen oder in bereits vorausgewählten Bildern nach Gesichtern zu suchen, um damit ein zuverlässiges Kriterium bzw. eine Voraussetzung für das Auftreten von rote-Augen-Defekten zur Verfügung zu haben. Findet sich in den Bilddaten ein Gesicht und sind noch weitere Kriterien für das Vorliegen von rote-Augen-Defekten wie beispielsweise das Vorliegen einer Blitzaufnahme, rote Flecken im Bild, Rotweißkombinationen, hohe Kontraste etc. erfüllt, so kann davon ausgegangen werden, dass rote-Augen-Defekte korrigiert werden müssen.

Eine vorteilhafte Methode der Überprüfung von Kriterien für das Vorliegen von rote-Augen-Defekten besteht darin, mittels Objekterkennungsverfahren Gesichter in den Bilddaten zu suchen und bei Vorhandensein von Gesichtern an den im Rahmen der Objekterkennungsverfahren automatisch vorgegebenen Augenpositionen rote Flecken zu suchen und gegebenenfalls zusätzlich Kriterien wie z. B. das Verwenden von Blitzlicht bei der Aufnahme zu überprüfen, um Fehleinschätzungen auszuschließen.

Eine weitere vorteilhafte Methode, ein Objekterkennungsverfahren im Rahmen eines Verfahrens zur Erkennung roter-Augen-Defekte zu verwenden, besteht darin, es als weiteres Kriterium unabhängig von anderen Kriterien für das Vorliegen von rote-Augen-Defekten einzusetzen, um zu überprüfen, ob sich Gesichter im Bilddatensatz befinden. Dadurch, dass mehrere unterschiedliche Kriterien unabhängig voneinander analysiert werden, kann vermieden werden, dass das rote-Augen-Erkennungsverfahren abgebrochen wird, sobald ein Kriterium fälschlicherweise als nicht vorhanden erkannt wird. Damit erhöht sich die Zuverlässigkeit des Verfahrens. Obwohl das Verfahren auch durchführbar ist, wenn die Anzeichen und Voraussetzungen nur als vorhanden bzw. nicht vorhanden klassifiziert werden, ist es doch genauer, Wahrscheinlichkeiten für das Vorhandensein zu ermitteln, da die meisten Anzeichen und Voraussetzungen bzw. Kriterien nicht als hundertprozentig gegeben oder nicht gegeben analysiert werden können. Das Ermitteln von Wahrscheinlichkeiten eröffnet die Möglichkeit, in die Endbewertung einzubringen, wie sicher ein Anzeichen bzw. eine Voraussetzung ermittelt werden konnte oder nicht. Damit fließt neben dem Vorhandensein von Anzeichen und Voraussetzungen ein weiteres Kriterium, nämlich die Sicherheit bzw. Unsicherheit dieser Feststellung, mit in die Bewertung ein, was zu einem weitaus exakteren Gesamtergebnis führt. Aus den einzelnen Wahrscheinlichkeiten läßt sich für die Gesamtbewertung eine Gesamtwahrscheinlichkeit ermitteln, welche durch Vergleich mit einem Schwellwert ein Maß dafür ist, ob rote-Augen-Defekte vorliegen oder nicht.

Sehr vorteilhaft ist es auch, die ermittelten Werte des Vorhandenseins der Anzeichen oder Voraussetzungen mit einer Wichtung in die Gesamtbewertung einfließen zu lassen. Dadurch ist es beispielsweise möglich, die Anzeichen und Voraussetzungen zu kategorisieren in solche, welche sehr relevant für die Entscheidung auf rote-Augen-Defekte sind, in solche, die zwar ein gutes Anzeichen oder eine Voraussetzung sind, aber nicht immer vorliegen, und in solche, die nur manchmal auftreten. Dadurch, dass diese unterschiedlich kategorisierten Anzeichen und Voraussetzungen gewichtet in die Bewertung einfließen, wird ihrer Relevanz Rechnung getragen, was wiederum die Genauigkeit der Entscheidung erhöht.

Besonders vorteilhaft ist es, die für das Vorhandensein von Anzeichen und Voraussetzungen unabhängig voneinander ermittelten Werte zur Gesamtbewertung in ein neuronales Netz einfließen zu lassen. Innerhalb eines neuronalen Netzes erfolgt automatisch eine Wichtung der Kriterien, welche aber vorteilhafterweise anhand von Beispielbildern innerhalb der Lernphase des Netzes vorgenommen wird. Dem neuronalen Netz kann sowohl die Zusammenfassung der Werte zu einer Gesamtbewertung als auch die Entscheidung, ob mögliche oder tatsächliche rote-Augen-Defekte vorliegen, übertragen werden. In das neuronale Netz können als Werte entweder Binärdaten - also die Feststellung "Anzeichen bzw. Voraussetzung vorhanden" oder "nicht vorhanden" - oder aber Wahrscheinlichkeiten für das Vorhandensein von Anzeichen bzw. Voraussetzungen eingegeben werden. Es ist aber auch jede andere Form von Wertung des Vorhandenseins, wie beispielsweise eine Einteilung in "nicht vorhanden", "wahrscheinlich nicht vorhanden", "wahrscheinlich vorhanden" oder "sicher vorhanden" vorstellbar. Bei der Erstellung der Werte lassen sich alle möglichen vorstellbaren Wertungen verwenden.

In einer besonders vorteilhaften Ausführungsform des Verfahrens werden Anzeichen bzw. Voraussetzungen wie z. B. das Verwenden von Blitzlicht und das Vorhandensein von Gesichtern im Bild parallel analysiert. Dadurch, dass Bild- bzw. Aufnahmedaten parallel auf Anzeichen bzw. Voraussetzungen hin untersucht werden, kann viel Rechenzeit gespart werden. Dies macht ein Einsetzen dieses Verfahrens bei fotografischen Kopiergeräten in Großlaboren u. U. überhaupt erst möglich, da diese Geräte viele tausend Bilder in einer Stunde verarbeiten müssen.

Dennoch ist das Überprüfen der Bilddaten auf das Vorliegen von rote-Augen-Defekten immer ein rechenzeitintensives Verfahren. Deshalb ist es besonders vorteilhaft, dem Verfahren zum Erkennen von rote-Augen-Defekten unabhängig davon, in welchem Rahmen das Objekterkennungsverfahren eingesetzt wird, eine Überprüfung der Bild- bzw. Aufnahmedaten auf Ausschlusskriterien hin vorzuschalten. Solche Ausschlusskriterien dienen dazu, rote-Augen-Defekte von vornherein auszuschließen, woraufhin das Verfahren zum Erkennen roter-Augen-Defekte automatisch abgebrochen werden kann. Dadurch kann zusätzlich viel Rechenzeit gespart werden. Derartige Ausschlusskriterien können beispielsweise sein: das Vorliegen von Aufnahmen, bei denen sicher kein Blitzlicht verwendet wurde, oder das Fehlen jeglicher größerer Gebiete mit Hauttönen oder ein starkes Abfallen der Fouriertransformierten der Bilddaten, was auf das Fehlen jeglicher Detailinformationen im Bild - also ein völlig homogenes Bild - hindeutet. Auch alle anderen Kriterien, die zur rote-Augen-Erkennung verwendet werden, sich beliebig schnell überprüfen lassen und mit großer Sicherheit ausgeschlossen werden können, sind als Ausschlusskriterien verwendbar. So kann es auch ein Ausschlusskriterium sein, dass in der gesamten Bildinformation keine roten oder überhaupt keine Farbtöne vorkommen.

Ein besonders aussagekräftiges Kriterium, das - wie bereits erwähnt - als Ausschlusskriterium dient, aber auch eine Voraussetzung ist für das Vorliegen von rote-Augen-Defekten, ist die Verwendung von Blitzlicht bei der Aufnahme des Bildes. Da es überhaupt nur zu rote-Augen-Defekten im Bild kommt, falls bei einer Personenaufnahme das Licht des Blitzes am Augenhintergrund gespiegelt wird, ist dies ein sehr sicheres Kriterium. Direkt läßt sich das Fehlen eines Blitzes bei einer Aufnahme jedoch nur feststellen, wenn mittels der Kamera beim Aufnehmen des Bildes sog. Blitzmarker gesetzt wurden. Diese Marker können von APS- oder digitalen Kameras gesetzt werden und zeigen an, ob ein Blitz verwendet wurde oder nicht. Falls ein Blitzmarker gesetzt wurde, der besagt, dass bei der Aufnahme kein Blitz verwendet wurde, kann mit großer Sicherheit davon ausgegangen werden, dass keine rote-Augen-Defekte im Bild auftreten.

Bei der Mehrzahl der Bilder, bei denen jedoch kein derartiger Blitzmarker gesetzt wurde, kann nur indirekt darauf geschlossen werden, dass keine Blitzaufnahme vorliegt. Dies ist beispielsweise anhand einer Bildanalyse feststellbar. In dieser können starke Schatten von Personen am Hintergrund gesucht werden, deren Kontur mit der Kontur des Gesichts übereinstimmt, deren Fläche jedoch eine andere Farbe bzw. eine andere Bilddichte aufweist als das Gesicht. Sobald solche sehr dominanten Schlagschatten auftreten, kann davon ausgegangen werden, dass mit großer Wahrscheinlichkeit ein Blitz bei der Aufnahme verwendet wurde.

Ein Anzeichen dafür, dass kein Blitz bei der Aufnahme verwendet wurde, ist es, wenn erkannt wird, dass es sich um ein sehr kontrastarmes Bild handelt. Ebenso deutet das Erkennen eines sog. Kunstlichtbildes, also eines Bildes, das die typischen Farben einer Glühlampenbeleuchtung oder Neonröhre aufweist, darauf hin, dass gar kein bzw. kein dominanter Blitz verwendet wurde. Ein Teil der Analyse, die zur Feststellung erfolgt, ob Blitzlicht verwendet wurde, kann bereits anhand der sog. Prescandaten (den Daten aus der Vorabtastung) vorgenommen werden. Üblicherweise wird beim Abtasten fotografischer Vorlagen vor dem eigentlichen Abtastvorgang, der die Bilddaten ergibt, ein Prescan durchgeführt, welcher eine Auswahl dieser Bilddaten in viel geringerer Auflösung ermittelt. Diese Prescandaten werden hauptsächlich dazu verwendet, die Empfindlichkeit des Aufnahmesensors für die Hauptabtastung optimal einzustellen. Sie bieten sich jedoch auch an, beispielsweise das Vorliegen einer Kunstlichtaufnahme oder einer kontrastarmen Aufnahme etc. festzustellen.

Diese niedrig aufgelösten Daten bieten sich zur Überprüfung der Ausschlusskriterien an, da ihre Analyse aufgrund des geringen Datensatzes nicht viel Zeit in Anspruch nimmt. Falls nur eine Abtastung der Bilder erfolgt oder nur hoch aufgelöste, digitale Daten vorliegen, ist es vorteilhaft, diese zum Überprüfen der Ausschlusskriterien zu nieder aufgelösten Daten zusammenzufassen. Dies kann durch Rasterung, Mittelwertbildung oder eine Pixelauswahl geschehen.

Um die Sicherheit der Aussage über das Vorliegen einer Blitzaufnahme bzw. das Fehlen von Blitzlicht bei der Aufnahme des Bildes zu erhöhen, ist es vorteilhaft, verschiedene der hier angegebenen Kriterien zu überprüfen und die bei Überprüfung der einzelnen Kriterien gewonnenen Ergebnisse zu einem Gesamtergebnis und einer Aussage über das Verwenden von Blitzlicht zusammenzufassen. Um Rechenzeit zu sparen, ist es auch hier besonders vorteilhaft, die Kriterien parallel zu analysieren. Die Auswertung kann ebenfalls anhand von Wahrscheinlichkeiten oder über ein neuronales Netz erfolgen.

Ein weiteres, für das automatische Erkennen von rote-Augen-Defekten wichtiges, zu überprüfendes Anzeichen sind zusammenliegende Hauttöne. Obwohl es mit Sicherheit Bilder gibt, die keine zusammenliegenden Hauttöne aufweisen und dennoch rote-Augen-Defekte zeigen (z. B. die Aufnahme eines mit einer Faschingsmaske abgedeckten Gesichts), kann dieses Anzeichen bei Inkaufnahme einiger Fehlentscheidungen auch als Ausschlusskriterium verwendet werden, um die Bilder einzuschränken, bei denen überhaupt nach rote-Augen-Defekten gesucht wird.

Besonders vorteilhaft ist es jedoch, dieses Kriterium ebenso wie andere in den Bilddaten zu überprüfen und es als eines von vielen Kriterien in eine Gesamtbewertung einfließen zu lassen. Damit würde gewährleistet, dass auch bei Faschingsbildern, bei Aufnahmen von Personen mit anderen Hauttönen oder bei sehr farbigen dominanten Beleuchtungen, bei denen die Hauttöne verändert werden, rote-Augen-Defekte in den Bildern gefunden werden können. Obwohl bei solchen Bildern das Anzeichen "Hautton" fehlt, könnten alle anderen überprüften Kriterien mit so großer Wahrscheinlichkeit bzw. so sicher ermittelt werden, dass die Gesamtbewertung ein Vorliegen von rote-Augen-Defekten feststellt bzw. nahelegt, obwohl keine Hauttöne vorhanden sind. Das im Stand der Technik beschriebene Verfahren würde dagegen beim Fehlen von Hauttönen das rote-Augen-Erkennungsverfahren abbrechen und evtl. zu einer Fehlentscheidung kommen.

Falls aber in einem Bild Hauttöne vorhanden sind, kann davon ausgegangen werden, dass es sich um eine Personenaufnahme handelt, bei der das Vorhandensein von rote-Augen-Defekten viel wahrscheinlicher ist als bei allen anderen Aufnahmen. Damit kann dieses Kriterium stark gewichtet werden. Insbesondere können zusammenliegende Hauttöne noch daraufhin untersucht werden, ob sie Charakteristiken eines Gesichts - wie dessen Form und Größe etc. - erfüllen, da sich mit der Wahrscheinlichkeit, dass es sich um ein Gesicht handelt, auch die Wahrscheinlichkeit für rote-Augen-Defekte erhöht. In diesem Fall kann das Kriterium noch aussagekräftiger sein.

Falls die Überprüfung von Hauttönen als Ausschlusskriterium verwendet werden soll, bei dessen Fehlen rote-Augen-Defekte überhaupt nicht mehr gesucht werden, genügt es auch hier, die Prescandaten oder in ihrer Auflösung reduzierte, entsprechende Datensätze zu verwenden. Wenn keine Hauttöne in diesen sehr grob aufgelösten Daten auftreten, ist sicher keine große zusammenliegende Hauttonfläche in den Bilddaten vorhanden. Um Rechenzeit zu sparen, ist es nämlich möglicherweise sinnvoll, auf das Detektieren von roten Augen in sehr kleinen Gesichtern oder in Bildern, die keine Gesichter aufweisen, zu verzichten.

Besonders vorteilhaft ist es, das Objekterkennungsverfahren einzusetzen, um als mögliche rote-Augen-Defekte erkannte Artifakte zu verifizieren. Hierbei werden im Rahmen eines rote-Augen-Erkennungsverfahrens verschiedene Kriterien, welche auf das Vorliegen von rote-Augen-Defekten hindeuten, an den Bilddaten überprüft. Falls die Überprüfung dieser Kriterien zum Ergebnis hat, dass mit großer Wahrscheinlichkeit rote-Augen-Defekte vorliegen, werden diese möglichen rote-Augen-Kandidaten als potentielle Augenpositionen festgehalten. Mittels eines der beschriebenen oder bekannten Objekterkennungsverfahren wird nun versucht, ein Gesicht zu finden, welches zu der potentiellen Augenposition passt. Findet sich ein derartiges Gesicht, so kann davon ausgegangen werden, dass es sich bei dem rote-Augen-Kandidaten tatsächlich um einen rote-Augen-Defekt handelt, welcher zu korrigieren ist. Läßt sich dagegen kein Gesicht finden, dessen Augenposition durch einen der rote-Augen-Kandidaten bestimmt ist, so kann davon ausgegangen werden, dass es sich bei den rote-Augen-Kandidaten um andere rote Bilddetails handelt und diese keinesfalls korrigiert werden sollten. Das Objekterkennungsverfahren erst anzuwenden, sobald rote-Augen-Kandidaten im Bild ermittelt werden konnten, hat den großen Vorteil, dass es nur bei einer sehr geringen Bilderanzahl zum Einsatz kommt. Damit wird nur eine relativ geringe Anzahl von Bildern mit diesem zeitaufwändigen Verfahren bearbeitet, eine schnelle Verarbeitung der Gesamtzahl von zu kopierenden Bildern bleibt weiterhin gewährleistet. Es bietet sich also insbesondere bei sehr schnellen Großkopiergeräten an, ein Objekterkennungsverfahren erst zur Bestätigung von möglichen rote-Augen-Defekten einzusetzen, wenn solche in einem Bild erkannt wurden.

Es ist möglich, noch mehr Rechenzeit zu sparen, indem die rote-Augen-Kandidaten auf Ähnlichkeiten untersucht und bei gleichen Charakteristiken paarweise zusammengefasst werden. Durch Ermittlung eines potentiellen rote-Augen-Defektpaares bleiben für die Position eines zu suchenden Gesichts nur zwei Orientierungen übrig. Damit sind die Möglichkeiten, die ein Objekterkennungsverfahren durchzutesten hat, sehr eingeschränkt, das Verfahren kann sehr schnell durchgeführt werden. Nachteilig dabei ist zwar, dass rote-Augen-Defekte, welche nur bei einem Auge, beispielsweise bei Profilaufnahmen, auftreten, nicht erkannt werden können, da diese aber relativ selten sind, kann im Zuge der Rechenzeitersparung dieser Nachteil u. U. in Kauf genommen werden. Um die zu verifizierenden rote-Augen-Kandidaten zu ermitteln, können die im Ausführungsbeispiel beschriebenen Verfahren angewandt werden, es eignen sich aber auch Verfahren wie die im Stand der Technik beschriebenen, beispielsweise wie das in der EP 0 961 225 offenbarte Verfahren. Da anhand des Gesichtsfinders eine sehr zuverlässige Überprüfung von rote-Augen-Kandidaten erfolgt, ist es möglich, die Verfahren zur Erkennung der Kandidaten in ihrer Genauigkeit zu reduzieren. So reicht es oftmals aus, nur wenige Kriterien für rote-Augen-Defekte zu überprüfen, ohne aufwändige Vergleiche mit Augentemplates oder Ähnliches durchführen zu müssen.

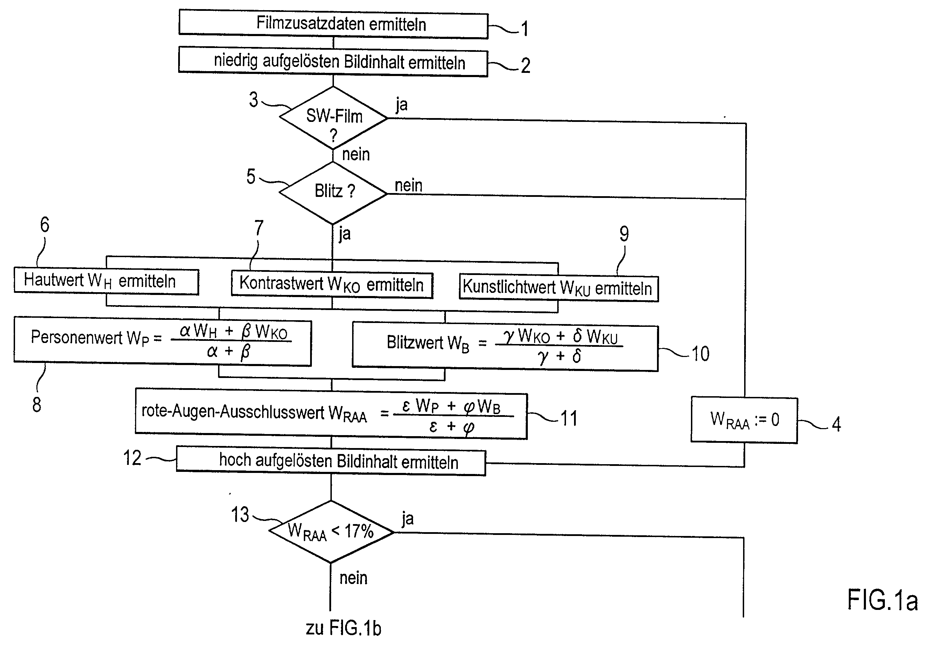

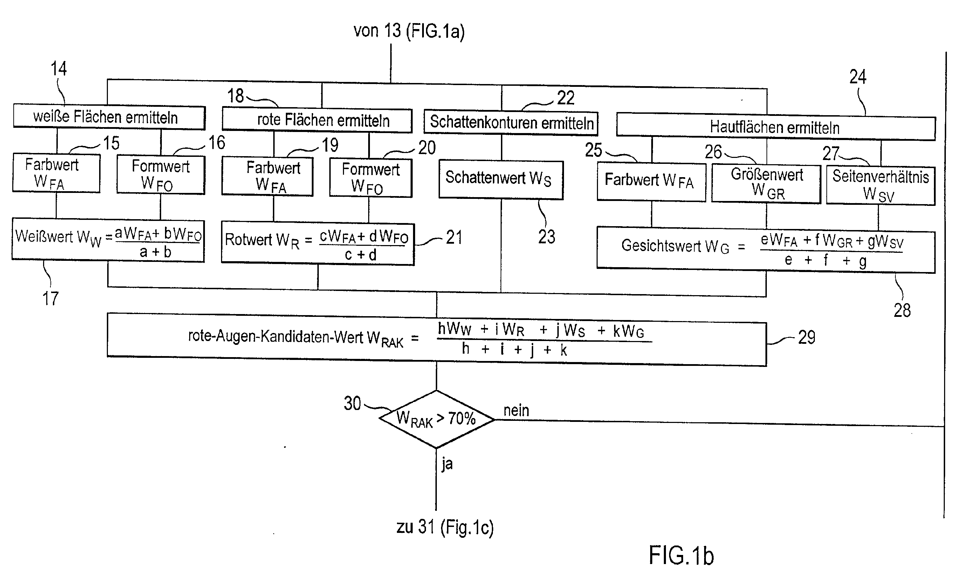

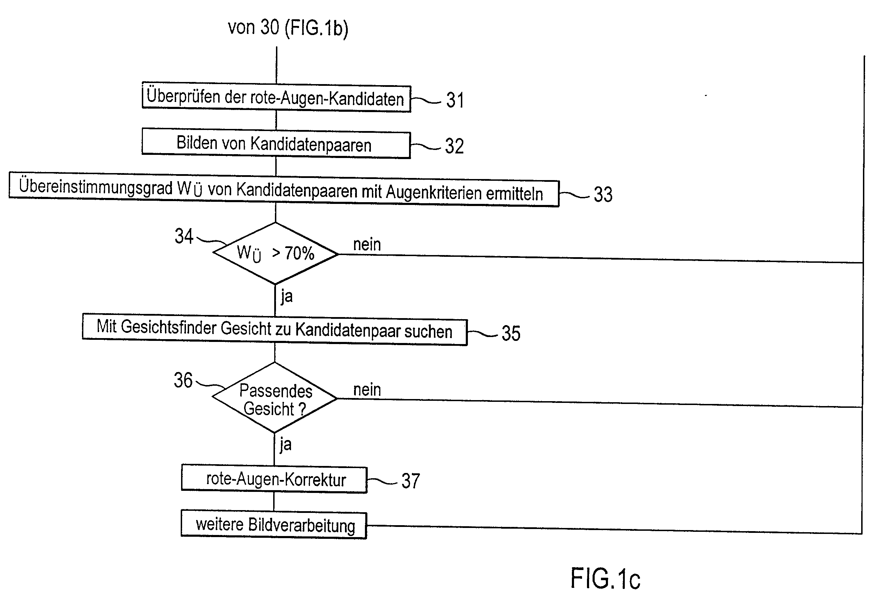

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

In der Figur wird anhand eines Flussdiagramms eine vorteilhafte Ausführungsform der Erfindung erläutert.

Um fotografische Bilddaten auf rote-Augen-Defekte hin untersuchen zu können, müssen die Bilddaten, wenn sie nicht ohnehin - z. B. von einer Digitalkameradigital vorliegen, zuerst an einer Abtasteinrichtung, einem sog. Scanner, ermittelt werden. Hierbei ist es in der Regel vorteilhaft, in einer niedrig aufgelösten Vorabtastung zuerst Filmzusatzdaten, wie beispielsweise den Magnetstreifen eines APS-Films, auszulesen und in einem groben Raster den Bildinhalt zu ermitteln. Für derartige Vorabtastungen werden in der Regel CCD-Zeilen verwendet, wobei die Filmzusatzdaten entweder mit derselben CCD-Zeile wie der Bildinhalt ausgelesen oder an einem eigenen Sensor erfasst werden. Die Filmzusatzdaten werden in einem Schritt 1 ermittelt, sie können aber auch parallel mit den nieder aufgelösten Bildinhaltsdaten erfasst werden, welche ansonsten in einem Schritt 2 ermittelt werden. Die nieder aufgelösten Bilddaten können auch dadurch gewonnen werden, dass der Film hoch aufgelöst abgetastet wird und dieser hoch aufgelöste Datensatz zu einem niedriger aufgelösten Datensatz zusammengefasst wird. Das Zusammenfassen kann beispielsweise dadurch geschehen, dass über eine bestimmte Datenanzahl der Mittelwert gebildet wird oder dadurch, dass nur jeder x-te hoch aufgelöste Bildpunkt für den nieder aufgelösten Bilddatensatz berücksichtigt wird. Anhand der Filmzusatzdaten wird dann in einem Schritt 3 bzw. im ersten Datenauswertschritt entschieden, ob es sich um einen Schwarzweißfilm handelt. Falls es sich um einen Schwarzweißfilm handelt, wird das rote-Augen-Erkennungsverfahren abgebrochen, der rote-Augen-Ausschlusswert W_{RAA} wird in einem Schritt 4 auf Null gesetzt, die hoch aufgelösten Bilddaten werden ermittelt, falls sie nicht aus einem digitalen Datensatz ohnehin vorliegen, und die Bearbeitung der hoch aufgelösten Bilddaten mittels weiterer vorgesehener Bildverarbeitungsverfahren wird fortgesetzt. Ebenso wird verfahren, wenn in einem Prüfschritt 5 festgestellt wird, dass in den Filmzusatzdaten ein Blitzmarker enthalten ist und dieser anzeigt, dass bei der Aufnahme des Bildes nicht geblitzt wurde. Sobald anhand eines derartigen Blitzmarkers festgestellt wurde, dass bei der Aufnahme kein Blitz verwendet wurde, können im Bilddatensatz keine roten-Augen-Defekte vorliegen. Deshalb wird auch hier der rote-Augen-Ausschlusswert W_{RAA} auf Null gesetzt, die hoch aufgelösten Bilddaten ermittelt und andere, weitere Bildverarbeitungsverfahren werden begonnen. Anhand der Ausschlusskriterien "Schwarzweißfilm" und "kein Blitz bei der Aufnahme", welche sich aus den Filmzusatzdaten ermitteln lassen, werden also von vornherein Bilder, welche mit Sicherheit keine roten Augen aufweisen können, von dem rote-Augen-Erkennungsverfahren ausgeschlossen. Durch das Verwenden derartiger Ausschlusskriterien kann viel Rechenzeit gespart werden, da auf die ausgeschlossenen Bilder das weitere, aufwändige rote-Augen-Erkennungsverfahren nicht mehr angewandt werden muss.

In den folgenden Schritten werden weitere Ausschlusskriterien überprüft, welche aus dem niedrig aufgelösten Bildinhalt abgeleitet werden können. So wird bei den verbleibenden Bildern aus deren nieder aufgelösten Bilddaten in einem Schritt 6 der Hautwert ermittelt. Hierfür werden in den Bilddaten in einem sehr groben Raster Hauttöne gesucht, welche ein Hinweis darauf sind, dass sich auf der Fotografie überhaupt Personen befinden. Als weiterer Hinweis hierfür zählt auch der in einem Schritt 7 ermittelte Kontrastwert. In einem sehr kontrastarmen Bild kann ebenfalls davon ausgegangen werden, dass keine Personen aufgenommen wurden. Es ist vorteilhaft, Hautwert und Kontrastwert in einem Schritt 8 zu einem Personenwert zusammenzufassen. Dabei ist es sinnvoll, eine Wichtung der Ausschlusswerte "Hautwert" und "Kontrastwert" vorzunehmen. So kann beispielsweise der Hautwert bei der Frage, ob Personen auf dem Bild vorhanden sind, ein größeres Gewicht haben als der Kontrastwert. Die richtige Wichtung läßt sich anhand der Überprüfung mehrerer Bilder herausfinden, bzw. sie kann auch durch eine Bearbeitung der Werte in einem neuronalen Netz erfolgen. Der Kontrastwert wird mit einem in Schritt 9 ermittelten Kunstlichtwert zusammengefasst, welcher darüber Aufschluss gibt, ob eine künstliche Beleuchtung - wie beispielsweise eine Glühbirne oder Neonröhre - im Bild dominiert hat, um eine Aussage darüber zu gewinnen, ob die Aufnahme der Bilddaten von einem Kamerablitz dominiert wurde. Dabei wird aus Kontrastwert und Kunstlichtwert der Blitzwert in Schritt 10 gebildet.

Sind Personen- und Blitzwert sehr gering, so kann davon ausgegangen werden, dass sich weder eine Person auf dem Bild befindet noch eine Blitzaufnahme gemacht wurde. Damit kann das Auftreten von rote-Augen-Defekten im Bild ausgeschlossen werden. Hierfür wird aus Personenwert und Blitzwert in einem Schritt 11 der rote-Augen-Ausschlusswert W_{RAA} gebildet. Es ist nicht zwingend notwendig, dass die Ausschlusskriterien "Personenwert" und "Blitzwert" zu einem einzigen Ausschlusswert zusammengefasst werden. Sie können ebenso als getrennte Ausschlusswerte betrachtet werden. Weiterhin ist vorstellbar, beliebige andere Ausschlusskriterien zu überprüfen, welche einen Hinweis darauf geben, dass keine rote-Augen-Defekte in den Bilddaten vorliegen können.

Wichtig bei der Wahl der Ausschlusskriterien ist es, darauf zu achten, dass die Überprüfung dieser Kriterien aufgrund der nieder aufgelösten Bilddaten möglich sein muss, da nur sinnvoll Rechenzeit gespart werden kann, wenn sehr wenige Bilddaten sehr schnell daraufhin untersucht werden können, ob ein rote-Augen-Erkennungsverfahren überhaupt angewandt werden soll oder solche Defekte von vornherein ausgeschlossen werden können. Würde die Überprüfung von Ausschlusskriterien an den hoch aufgelösten Bilddaten erfolgen, wäre die Einsparung der Rechenzeit nicht so groß, dass es sich lohnen würde, bereits vor dem Defekterkennungsverfahren zusätzlich Kriterien zu überprüfen. In diesem Fall wäre es sinnvoller, gleich bei allen Aufnahmen ein rote-Augen-Erkennungsverfahren durchzuführen. Werden hingegen die nieder aufgelösten Bildinhaltsdaten verwendet, um Ausschlusskriterien zu überprüfen, kann diese Überprüfung sehr schnell erfolgen, so dass viel Rechenzeit gespart wird, da nicht bei jedem Bild das aufwändige rote-Augen-Erkennungsverfahren anhand der hoch aufgelösten Daten vorgenommen werden muss.

Falls sie noch nicht digital vorliegen, müssen in einem Schritt 12 nunmehr von allen Bildern die Daten des hoch aufgelösten Bildinhalts ermittelt werden. Dies erfolgt bei fotografischen Filmen in der Regel durch Scannen mit einem hoch auflösenden Flächen-CCD. Es ist aber auch möglich, CCD-Zeilen zu verwenden oder entsprechende, in diesem Bereich gängige andere Sensoren.

Falls die Voranalyse ergeben hatte, dass der rote-Augen-Ausschlusswert sehr gering ist, wird davon ausgegangen, dass keine rote-Augen-Defekte auf dem Bild vorliegen können. Die weiteren Bildverarbeitungsverfahren wie beispielsweise Verschärfung oder Kontrastbearbeitung werden eingeleitet, ohne ein rote-Augen-Erkennungsverfahren an dem entsprechenden Bild vorzunehmen. Ergibt dagegen der Überprüfungsschritt 13, dass rote-Augen-Defekte nicht von vornherein ausgeschlossen werden können, so werden die hoch aufgelösten Bilddaten daraufhin überprüft, ob bestimmte Voraussetzungen oder Anzeichen für das Vorliegen von rote-Augen-Defekten vorhanden sind, es beginnt das eigentliche Defekt-Erkennungsverfahren.

Diese Voraussetzungen und/oder Anzeichen werden vorteilhafterweise unabhängig voneinander geprüft. Um Rechenzeit zu sparen, ist es besonders vorteilhaft, sie parallel zu prüfen. So werden in einem Schritt 14 die hoch aufgelösten Bilddaten daraufhin untersucht, ob in ihnen weiße Flächen zu finden sind. Zu derartigen weißen Flächen wird ein Farbwert W_{FA} in einem Schritt 15 ermittelt, der ein Maß dafür ist, wie reinweiß diese weißen Flächen sind. Außerdem wird in einem Schritt 16 ein Formwert W_{FO} ermittelt, welcher angibt, ob diese ermittelten weißen Flächen in etwa der Form eines abgebildeten Augapfels oder einem Lichtreflex in einem Auge entsprechen können oder nicht. Farbwert und Formwert werden in einem Schritt 17 zu einem Weißwert zusammengefasst, wobei auch eine Wichtung dieser Werte vorgenommen werden kann. Parallel dazu werden in einem Schritt 18 rote Flächen ermittelt, denen ebenfalls in den Schritten 19 und 20 Farb- und Formwert zugewiesen werden. Hieraus wird für die roten Flächen in einem Schritt 21 der Rotwert ermittelt. Der Formwert bei roten Flächen bezieht sich darauf, ob die Form der ermittelten roten Flächen in etwa der Form eines rote-Augen-Defekts entspricht.

In einem weiteren, parallel zu untersuchenden Schritt 22 werden Schattenkonturen in den Bilddaten ermittelt. Dies kann beispielsweise dadurch geschehen, dass nach parallel gleich verlaufenden Konturlinien gesucht wird, wobei eine dieser Linien hell, die andere aber dunkel ist. Derartige Doppelkonturlinien sind ein Anzeichen dafür, dass der Schattenwurf einer Lichtquelle vorliegt. Wenn die Hell-/Dunkeldifferenz besonders groß ist, kann davon ausgegangen werden, dass die den Schatten erzeugende Lichtquelle das Blitzlicht einer Kamera war. Damit gibt der diesen Sachverhalt widerspiegelnde Schattenwert, welcher in einem Schritt 23 ermittelt wird, Auskunft darüber, ob die Wahrscheinlichkeit für einen Blitz hoch ist oder nicht.

In einem weiteren Schritt 24 werden die Bilddaten auf das Auftreten von Hautflächen hin untersucht. Sobald Hautflächen gefunden werden, wird von diesen ein Farbwert - also ein Wert, der darüber Auskunft gibt, wie nahe die Farbe der Hautflächen an einer Hauttonfarbe liegt - in einem Schritt 25 ermittelt. In einem Schritt 26 Wird parallel dazu ein Größenwert bestimmt, welcher ein Maß für die Größe der Hautflächen ist. Ebenso parallel dazu wird in einem Schritt 27 das Seitenverhältnis, also das Verhältnis von langer zu kurzer Seite der Hautfläche, ermittelt. Farbwert, Größenwert und Seitenverhältnis werden in einem Schritt 28 zu einem Gesichtswert zusammengefasst, welcher ein Maß dafür ist, inwieweit die ermittelte Hautfläche in Farbe, Größe und Form einem Gesicht ähnelt.

In einem Schritt 29 werden Weißwert, Rotwert, Schattenwert und Gesichtswert zu einem rote-Augen-Kandidatenwert W_{RAK} zusammengefasst. Dabei kann davon ausgegangen werden, dass beim Vorliegen von weißen Flächen, roten Flächen, Schattenkonturen und Hautflächen in digitalen Bilddaten die Wahrscheinlichkeit für das Vorliegen von roten Augen sehr groß ist und die ermittelten roten Flächen als rote-Augen-Kandidaten gewertet werden können, falls sie sich aufgrund ihrer Form dazu eignen. Bei der Bildung dieses rote-Augen-Kandidatenwerts können noch weitere Bedingungen über den Zusammenhang von Weißwert, Rotwert und Gesichtswert eingebracht werden. So kann beispielsweise ein Faktor eingeführt werden, der Aufschluss darüber gibt, ob rote und weiße Flächen nebeneinander liegen oder nicht. Ebenso kann berücksichtigt werden, ob rote und weiße Flächen innerhalb der ermittelten Hautfläche liegen oder weit entfernt von ihr. Diese Zusammenhangsfaktoren können in den rote-Augen-Kandidatenwert mit eingerechnet werden. Eine Alternative zur Ermittlung des rote-Augen-Kandidatenwerts ist es, Farbwerte, Formwerte, Schattenwert, Größenwert, Seitenverhältnis etc. gemeinsam mit Zusammenhangsfaktoren in ein neuronales Netz einzuspeisen und von diesem den rote-Augen-Kandidatenwert ausgeben zu lassen.

In einem Schritt 30 wird schließlich der ermittelte rote-Augen-Kandidatenwert mit einem Schwellwert verglichen. Falls der Wert die Schwelle überschreitet, wird davon ausgegangen, dass rote-Augen-Kandidaten im Bild vorliegen. In einem Schritt 31 Wird überprüft, ob diese roten-Augen-Kandidaten tatsächlich rote-Augen-Defekte sein können. Hierbei können beispielsweise rote-Augen-Kandidaten und ihre Umgebung mit dem Dichteprofil von wirklichen Augen verglichen werden, um aufgrund von Ähnlichkeiten darauf zu schließen, dass die rote-Augen-Kandidaten sich tatsächlich innerhalb eines aufgenommenen Auges befinden.

Eine weitere Möglichkeit der Überprüfung der rote-Augen-Kandidaten ist es, jeweils zwei zusammenpassende Kandidaten mit annähernd gleichen Eigenschaften zu suchen, welche zu einem Augenpaar gehören. Dies kann in einem folgenden Schritt 32 oder auch alternativ zu Schritt 31 oder aber parallel dazu erfolgen. Falls dieser Überprüfungsschritt gewählt wird, werden nur rote-Augen-Defekte in frontal aufgenommenen Gesichtern erkannt. Profilaufnahmen mit nur einem roten Auge können davon nicht erfasst werden. Da rote-Augen-Defekte aber im allgemeinen bei Frontalaufnahmen auftreten, kann dieser Fehler in Kauf genommen werden, um Rechenzeit zu sparen. Falls zum Überprüfen die in den Schritten 31 und 32 vorgeschlagenen Kriterien betrachtet werden, wird anhand dieser Kriterien ein Schritt 33 der Übereinstimmungsgrad der gefundenen Kandidatenpaare mit Augenkriterien ermittelt. Im Schritt 34 wird der Übereinstimmungsgrad mit einem Schwellwert verglichen, um danach zu entscheiden, ob die rote-Augen-Kandidaten mit großer Wahrscheinlichkeit rote-Augen-Defekte sind oder nicht. Falls keine große Übereinstimmung festgestellt werden kann, muss davon ausgegangen werden, dass es sich um irgendwelche anderen roten Bildinhalte handelt, welche keinesfalls zu korrigieren sind. In diesem Fall wird die Bearbeitung des Bildes mit anderen Bildverarbeitungsalgorithmen fortgesetzt, ohne eine rote-Augen-Korrektur vorzunehmen.

Falls der Übereinstimmungsgrad der Kandidaten mit Augenkriterien jedoch relativ groß ist, wird in einem weiteren Schritt 35 ein Gesichtserkennungsverfahren auf die digitalen Bilddaten angewandt, welches ein zu dem Kandidatenpaar passendes Gesicht suchen soll. Eine Paarbildung aus den Kandidaten hat dabei den Vorteil, dass die Orientierung eines möglichen Gesichts schon vorgegeben ist. Nachteilig ist - wie bereits erwähnt - dass rote-Augen-Defekte in Profilaufnahmen nicht erkannt werden. Falls dieser Fehler nicht in Kauf genommen werden soll, ist es jedoch auch möglich, zu jedem rote-Augen-Kandidaten ein Gesichtserkennungsverfahren zu starten und ein zu diesem Kandidaten möglicherweise passendes Gesicht zu suchen. Dies erfordert mehr Rechenzeit, führt aber zu einem sichereren Ergebnis. Falls in einem Schritt 36 kein zu rote-Augen-Kandidaten passendes Gesicht gefunden wird, muss davon ausgegangen werden, dass es sich bei den rote-Augen-Kandidaten nicht um Defekte handelt, das rote-Augen-Korrekturverfahren wird nicht angewandt, sondern weitere Bildverarbeitungsalgorithmen werden gestartet. Falls jedoch ein zu den rote-Augen-Kandidaten passendes Gesicht ermittelt werden kann, kann davon ausgegangen werden, dass es sich bei den rote-Augen-Kandidaten tatsächlich um Defekte handelt, und diese werden in einem Korrekturschritt 37 mit einem gängigen Korrekturverfahren korrigiert. Als zur Überprüfung von rote-Augen-Kandidaten geeignetes Gesichtserkennungsverfahren können beispielsweise die bereits beschriebenen, mit Dichteverläufen arbeitenden Verfahren verwendet werden. Prinzipiell ist es aber auch möglich, einfachere Verfahren wie Hauttonerkennung und Ellipsenfit zu verwenden. Diese sind jedoch fehleranfälliger.

## Patentansprüche

1. Verfahren zum automatischen Erkennen von rote-Augen-Defekten in fotografischen Bilddaten, **dadurch gekennzeichnet, dass** ein Verfahrensschritt ein Objekterkennungsverfahren umfasst, welches Gesichter in Bilddaten anhand von Dichteverläufen findet, welche für diese typisch sind.

2. Verfahren nach Anspruch 1, **dadurch gekennzeichnet, dass** das Objekterkennungsverfahren mit Graustufenbildern arbeitet.

3. Verfahren nach Anspruch 1, **dadurch gekennzeichnet, dass** das Objekterkennungsverfahren auf einen in der Auflösung reduzierten Bilddatensatz angewandt wird, um Rechenzeit zu sparen.

4. Verfahren nach Anspruch 1, **dadurch gekennzeichnet, dass** beim Objekterkennungsverfahren Gesichtstemplates verwendet werden.

5. Verfahren nach Anspruch 1, **dadurch gekennzeichnet, dass** das Objekterkennungsverfahren mit verformbaren Gittern arbeitet.

6. Verfahren nach Anspruch 1, **dadurch gekennzeichnet, dass** das Objekterkennungsverfahren mit Eigenvektoren arbeitet.

7. Verfahren nach einem der vorhergehenden Ansprüche, **dadurch gekennzeichnet, dass** mittels des Objekterkennungsverfahrens ein Ähnlichkeitswert ermittelt wird, der ein Maß für die Ähnlichkeit von vorgegebenen Modellgesichtern mit dem Bildinhalt ist.

8. Verfahren nach Anspruch 7, **dadurch gekennzeichnet, dass** der Ähnlichkeitswert als Voraussetzung für das Auftreten von rote-Augen-Defekten im Erkennungsverfahren verwendet wird.

9. Verfahren nach Anspruch 8, **dadurch gekennzeichnet, dass** der Ähnlichkeitswert mit anderen Anzeichen und/oder Voraussetzungen für das Vorliegen von rote-Augen-Defekten verknüpft wird, um rote-Augen-Defekte zu erkennen.

10. Verfahren nach einem der vorhergehenden Ansprüche, **dadurch gekennzeichnet, dass** das Objekterkennungsverfahren eingesetzt wird, um mögliche rote-Augen-Defekte zu verifizieren.

11. Verfahren nach Anspruch 10, **dadurch gekennzeichnet, dass** das Objekterkennungsverfahren Gesichter sucht, bei denen ein als möglicher Kandidat erkannter rote-Augen-Defekt an einer Augenposition lokalisiert ist.

12. Verfahren nach Anspruch 10, **dadurch gekennzeichnet, dass** ähnliche, mögliche rote-Augen-Defekte paarweise zusammengefasst werden.

13. Verfahren nach Anspruch 12, **dadurch gekennzeichnet, dass** das Objekterkennungsverfahren Gesichter sucht, bei denen mögliche rote-Augen-Defekt-Paare an einer Augenposition lokalisiert sind.
